# EUROPEAN PATENT APPLICATION

(11) **EP 2 538 546 A2**
(43) Date of publication of application: **26.12.2012**
(21) Application number: 12171960.3
(22) Date of filing: 14.06.2012
(51) Int. Cl.: H02P 9/48

(54) **Electrical system architecture and electrical power generation system**

(30) Priority: 24.06.2011 GB 201110719
(71) Applicant: Rolls-Royce plc, London SW1E 6AT (GB)
(72) Inventor: Mountain, Stephen, Derby, DE73 8LQ (GB)
(74) Representative: Hartley, Andrew Colin

(57) **Abstract**

The present invention provides an electrical system architecture, for example for an aircraft, comprising a generator driven by an engine of the aircraft to generate electrical energy, which is arranged for extracting the said electrical energy as an AC signal for supply to a system bus. The electrical system architecture also comprises an active rectifier coupled to the system bus, that is adapted to rectify the AC signal to a DC signal for supply to a load in the system, and for controlling extraction of the said electrical energy by the generator. The present invention also provides an electrical power generation system, comprising a generator, including a stator and a rotor, for converting mechanical power into alternating current electrical power by electromagnetic induction, and an active rectifier for converting the alternating current output of the generator into direct current electrical power, wherein the active rectifier is further adapted control the alternating current electrical power provided at the output of the generator. The embodiments enable variable frequency aircraft AC loads to be connected directly to the generator.

## Description

### Field of the invention

The present invention relates to electrical system architectures and electrical power generation systems. In particular, the present invention relates to such systems including induction generators, particularly but not exclusively for aircraft.

### Background

The transmission and distribution of electrical power to primary loads in aeronautical applications now tend to use variable frequency instead of constant frequency. The use of variable frequency rather than constant frequency removes the need for speed or frequency changing devices that would otherwise be required in power generation systems to accommodate a changing mechanical input speed from an extremely variable source of mechanical power, which is often provided by a gas turbine engine capable of accelerating from rest to a normal rotational speed of 20,000 revolutions per minute.

Conventionally, the basis of the power generation system is at least one wound field synchronous generator driven by an aircraft engine to convert mechanical energy to electrical energy, the excitation of the wound field synchronous generator being controlled to regulate its electrical output.

In principle, synchronous generators generate electricity when the magnetic field around a conductor changes, such that a current is induced in the conductor. As is well known, the fundamental components of any electrical generator are a rotor and a stator, one acting as an armature or power generating component, the other as a field or magnetic-field generating component. Typically, the rotor, acting as the field for example, turns within the stator in the form of a stationary set of conductors wound in coils on an iron core. As the engine forces the rotor to turn, the field cuts across the conducting coils, thereby inducing an AC output in the stator windings.

The rotor magnetic field is produced by a rotor winding (field coil) energized with direct current either through slip rings and brushes, or by induction in brushless generators.

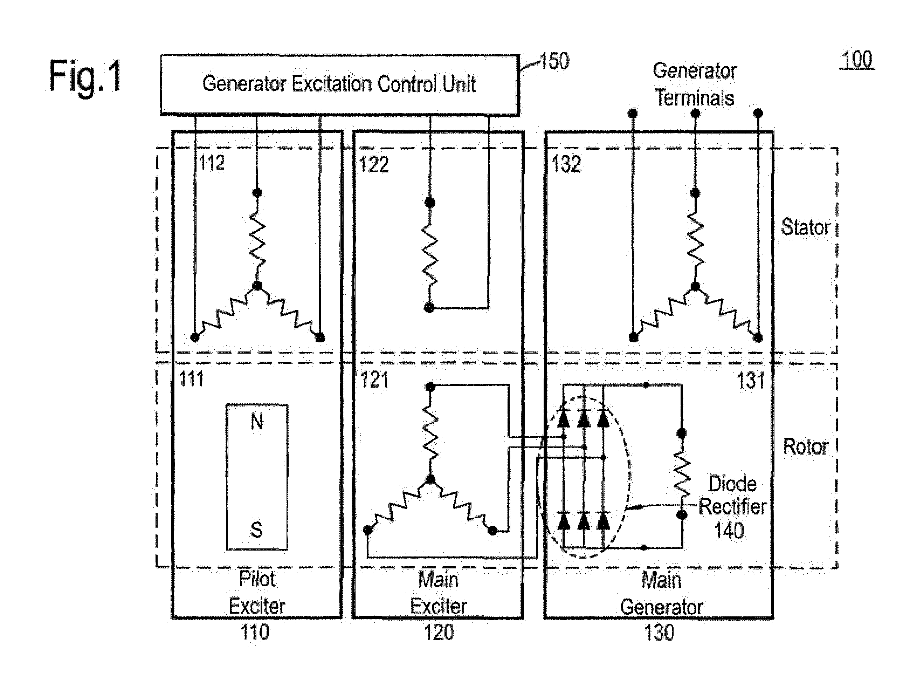

Existing aircraft power generation systems generally use so-called synchronous generators in which the frequency of the electrical power output tracks the rotation speed of the rotor, and thus depends on the speed of the driving engine. A synchronous generator is composed of two or more electrical machines (generators) built end-to-end on one shaft: a main generator for providing an output voltage to the system, and at least one exciter, for producing the current in the field coil of the main generator. Typically, a smaller pilot exciter and a larger main exciter are used. An example is shown in Figure 1 in the form of a wound field synchronous generator 100.

The main generator 130 and the exciters 110, 120 are arranged with alternate configurations of field and armature. The pilot exciter 110 comprises a rotating magnet rotor as its field 111 and wound stator as its armature 112. The main exciter 120 comprises a rotating armature 121 and stationary field coils 122. The main generator 130 comprises rotating field coils 131, as described above, and a stationary armature 132 from which the electrical power output is taken in the form of three-phase alternating current. The pilot exciter 110 and main exciter 120 are controlled by an excitation control unit 150, as indicated, which is typically mounted in the fuselage of the aircraft. A diode rectifier 140 is mounted on a plate attached to the rotor between the main exciter 120 and the main generator 130, and thus rotates along with the shaft.

The rotating magnet 111 of the pilot exciter 110 induces an alternating current in the armature 112, which in turn induces a magnetic field in the field coils 122 of the main exciter 120. By controlling the magnitude of the induced magnetic field in the stationary field coil 122 of the main exciter 120, it is possible to vary the power output from the main exciter 120. This output is rectified by the diode rectifier 140, mounted on the rotor, and the resultant DC output current supplies the rotating field coils 131 of the main generator 130. The result is that a small DC exciter current indirectly controls the output of the main generator 130.

The above-described wound field synchronous generator 100 requires three electrical generators (i.e. a pilot exciter 110, a main exciter 120, a main generator 130), plus a diode rectifier 140. Such a configuration is bulky, and the large machinery can impact upon the core drag or nacelle drag of an aircraft.

Moreover, an excitation control unit 150 must be installed to control the level of excitation in the generator 100 in order to achieve system voltage control. Typically this unit is located close to but separately from the generator 100, and thus is physically and electrically remote from the rest of the aircraft electrical system. As a result, the system tends to be slow to respond to transients in the electrical system (for example, voltage changes caused by changes to the load), thereby providing poor voltage control. This is due, in part, to the lag caused by inductance within components of the wound filed synchronous generator and the cabling between the generator and the various loads connected to the main aircraft distribution bus.

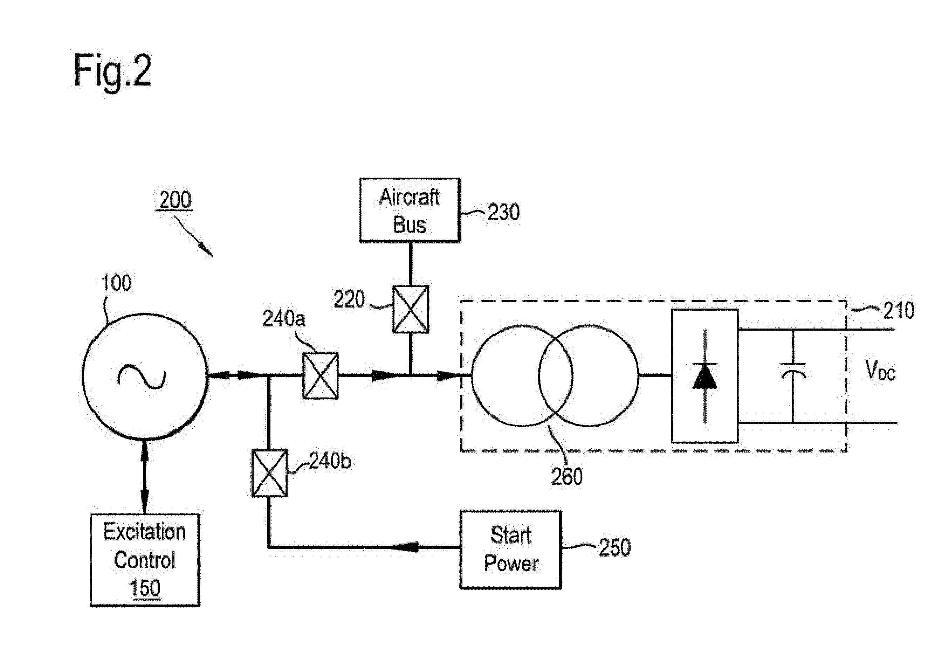

Figure 2 shows an example of how a synchronous generator as shown in Figure 1 is typically connected in an electrical system architecture of an aircraft. The electrical system architecture 200 comprises a wound field synchronous generator 100, which is controlled by an excitation control unit 150. A coupling switch 220 is provided for coupling the output of the wound field synchronous generator 100 to an aircraft system bus 230. One or more AC loads (not shown) are connected to the aircraft system bus.

A passive rectifier 210 is coupled to receive the AC voltage generated by the wound field synchronous generator 100. The passive rectifier 210 rectifies the AC voltage to provide a DC output voltage V_{DC}. The passive rectifier is typically a multi-phase rectifier having, for example, 6, 12, 18 or 24 pulses, typically 18 pulses to achieve harmonic power quality requirements. It will be appreciated that a transformer 260 is required for a passive rectifier having 12 pulses or greater.

It is usually a requirement to have a start function in the electrical system architecture 200 of an aircraft, whereby the wound field synchronous generator 100 can be operated in "reverse" to start the aircraft engine, i.e. the wound field synchronous generator 100 is operated as a motor, rather than a generator. Start transfer contactors 240a and 240b are therefore provided for enabling the architecture to be switched from a generator mode to a start mode. In the start mode of operation, start power 250, for example diverted from a nominated load, is connected to the wound field synchronous generator 100 using the contactor 240b, while contactor 240a is used to isolate the aircraft system bus 230 and passive rectifier 210.

A disadvantage of the electrical system architecture of Figure 2 is that, as mentioned above, the generator function is made up of three electrical machines, a rotating diode rectifier and a separately located excitation control unit. The three electrical machines (i.e. the pilot exciter, main exciter and main generator) and the passive diode rectifier are co-located making the generator component relatively large and heavy, which can lead to unreliability problems. Also, as mentioned above this can have a negative impact on the core drag or nacelle drag of an aircraft.

The architecture of Figure 2 also has the disadvantage of requiring contactors 240a/240b and a separate circuit for providing a start mode of operation, which again add to the general size and weight of the system.

Furthermore, synchronous machines, such as the wound field synchronous generator 100 shown in Figures 1 and 2, have a relatively stiff coupling between mechanical torque and the electrical load. As a result, fast changes in the electrical load tend to excite mechanical resonance in the generator and gearbox drive train, which can lead to unwanted vibrations.

It is therefore desirable to provide a smaller, lighter and more reliable electrical system architecture and electrical power generation system, suitable for example for aeronautical applications.

Furthermore, it is desirable for the electrical power generation system to respond quickly to system transients and to allow fast changes in electrical loads. It is also desirable to provide an electrical system architecture for an aircraft which is more responsive to changes in load conditions in the system.

### Summary

In view of the foregoing, the present invention provides an electrical system architecture for an aircraft. The electrical system architecture comprises a generator driven by an engine of the aircraft to generate electrical energy. The generator is arranged for extracting the electrical energy as an AC signal for supply to a system bus. The electrical system architecture also comprises an active rectifier coupled to the system bus and adapted to rectify the AC signal to a DC signal for supply to a load in the system. The active rectifier is also adapted to control extraction of the said electrical energy by the generator.

According to one embodiment the generator is an asynchronous generator, and the controlling comprises adjusting a difference between a power frequency of the active rectifier and an instantaneous synchronous frequency of the asynchronous generator to provide a slip frequency.

Preferably, in such an embodiment the generator is a squirrel cage induction machine. In an alternative embodiment, the generator is a synchronous permanent magnet generator.

An output voltage monitoring means may be provided for monitoring the DC signal of the active rectifier, wherein the active rectifier is adapted to maintain the power flow at a constant by adjusting the active rectifier power frequency in relation to the instantaneous synchronous frequency of the generator in accordance with the monitored DC signal.

According to another aspect of the present invention, there is provided an electrical power generation system, comprising a generator, including a stator and a rotor, for converting mechanical power into alternating current electrical power by electromagnetic induction, and an active rectifier for converting the alternating current output of the induction generator into direct current electrical power, wherein the active rectifier is further adapted to control the alternating current electrical power provided at the output of the generator.

Preferably, the active rectifier is adapted to control the alternating current electrical power provided at the output of the generator by adjusting the difference between the active rectifier power frequency and the instantaneous synchronous frequency of the generator, thereby creating a slip frequency.

Output voltage measuring means may be provided for measuring the output DC voltage of the active rectifier, wherein the active rectifier is arranged to maintain the power flow of the electrical power generation system at a constant by adjusting the slip frequency in accordance with the measured output DC voltage.

The generator of the system may be a squirrel cage induction machine. This is the more conventional construction of asynchronous machines, and provides a robust and reliable rotor construction.

Alternatively, the generator of the system may be a synchronous permanent magnet generator. This can be even smaller in size compare to a squirrel cage induction machine, and does not require an excitation current.

The system may be used in an aircraft electrical system, the generator arranged to be driven by an engine of the aircraft.

The generator of the system may be located at the engine while the active rectifier may be located at some load point in the aircraft electrical system. By this arrangement, the generator is close to the source of mechanical power, while the active rectifier, providing control for system voltage, is located near the voltage regulation point in the aircraft.

### Brief Description of the drawings

The present invention will be described, by way of an example, with reference to the accompanying drawings, in which:
Figure 1 shows a wound field synchronous generator used in a prior art example of an electrical power generation system;
Figure 2 shows an example of a known electrical system architecture for an aircraft, using an electrical power generation system of Figure 1;
Figure 3a shows an electrical system architecture for an aircraft according to an embodiment of the present invention;
Figure 3b shows examples of torque/speed curves;
Figure 4 shows an example of an asynchronous generator used in an embodiment of an electrical system architecture of Figure 3a; and
Figure 5 shows further details of an electrical system architecture according to another embodiment.

### Detailed Description

The embodiments below will be described in relation to an electrical system architecture for an aircraft. It is noted, however, that the invention may be used in other applications, i.e. electrical system architectures other than aircraft.

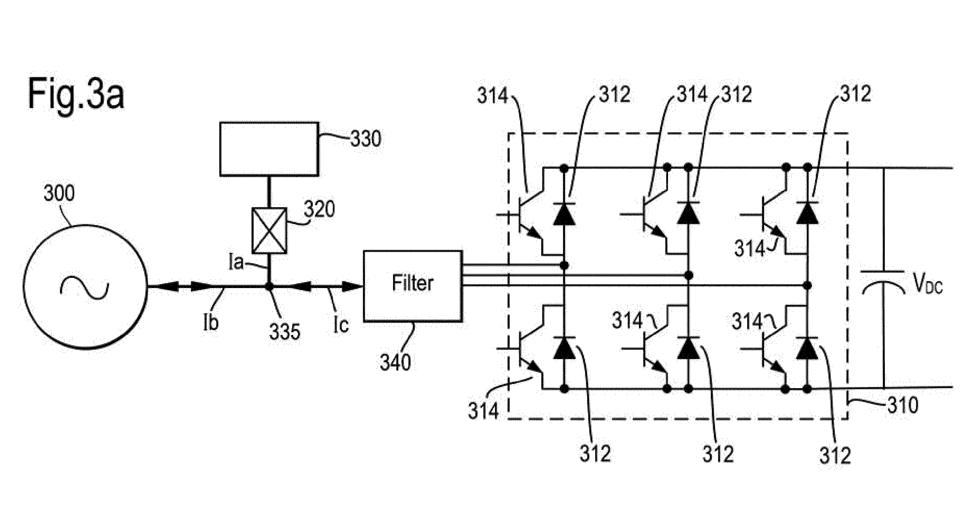

Figure 3a shows an embodiment of an electrical system architecture according to the present invention. An asynchronous generator 300 is used to replace the wound field synchronous generator 100 of Figures 1 and 2. The asynchronous generator 300 is coupled to an active rectifier 310. The asynchronous generator 300 is also coupled to an aircraft system bus 330, for example via a coupling switch 320. One or more AC loads (not shown) may be connected to the aircraft system bus 330. As will be described in greater detail below the active rectifier 310 is adapted to provide a DC voltage V_{DC} for one or more DC loads (not shown) that may be connected to the output of the active rectifier 310. Furthermore, the active rectifier 310 is adapted to directly control the voltage at node 335, thereby regulating the AC voltage provided to the aircraft system bus 330.

The asynchronous generator 300 has no excitation system or associated control variables associated therewith. In other words, the asynchronous generator 300 simply generates an AC voltage having characteristics that vary according to the rotational speed of the aircraft engine.

Instead, power flows at node 335 are managed by the active rectifier 310, which is adapted to control the system frequency to create a "slip" needed to extract the balance of power from the asynchronous generator 300, as will be described further below.

The voltage requirement of the aircraft system bus 330 is therefore directly imposed by the active rectifier 310. The necessary balancing of system reactive power is inherently provided by the active rectifier 310 as a consequence of this action, which will also be described in greater detail below.

It is noted that a filter 340 is shown as being provided between the asynchronous generator 300 and the active rectifier 310, for smoothing the voltage waveform and removing unwanted harmonic content. However, it is noted that the filter 340 is optional, and may be removed from the embodiment of Figure 3a if desired.

In the example of Figure 3a the active rectifier 310 comprises six rectifier diodes 312 which are individually controlled via respective switches 314, for example transistor switches. It is noted that the active rectifier may comprise other configurations, and comprise a different number of rectifier diodes 312 and switches 314 to that shown in the example of Figure 3a.

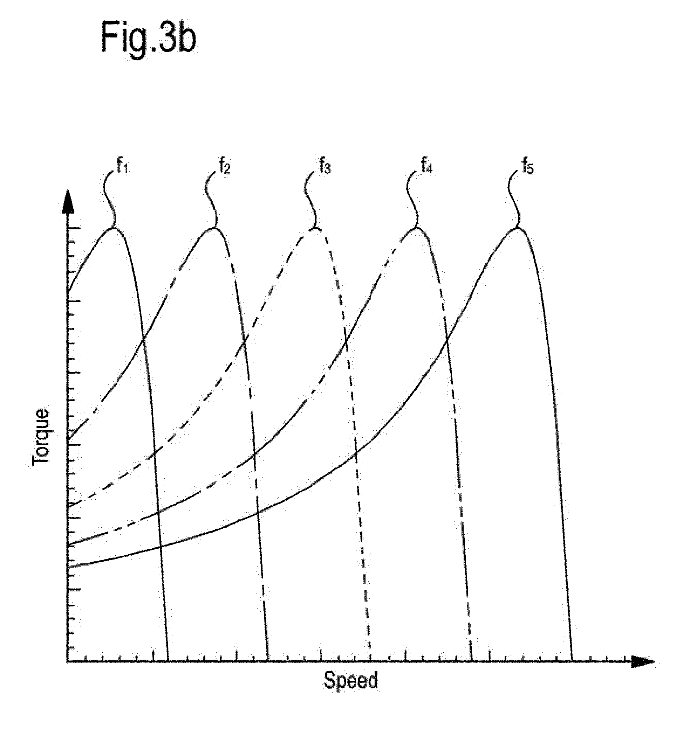

The active rectifier 310 provides a new control strategy for operating and maintaining system performance. Power control is achieved by adjusting the difference between the power frequency of the active rectifier 310 and the instantaneous synchronous frequency of the asynchronous generator 300, which is termed a "slip frequency". A torque/speed curve of the asynchronous generator 300 determines how much power is extracted for any given slip. Examples of torque/speed curves are shown in Figure 3b, for different frequencies f₁ to f₅.

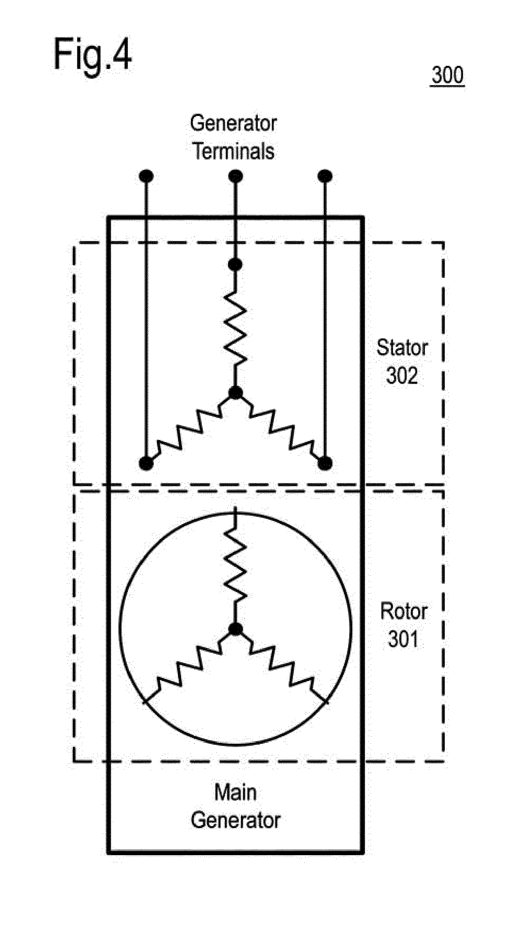

Figure 4 shows in greater detail an example of an asynchronous generator 300 that may be used in the embodiment of Figure 3a. In the asynchronous generator 300 the rotor 301 is forced to rotate, for example by an aircraft gas turbine engine, and when the rotor 301 is rotating at a rotational speed above the synchronous speed of the asynchronous generator 300, electricity is generated. In particular, the faster the rotor 301 rotates, the more power is transferred. The rotor 301 is placed in the centre of the stator 302, for example. The asynchronous generator 300 of this embodiment differs from the synchronous generator 100 of Figures 1 and 2 in the design of the rotor 301. Typically, the rotor 301 consists of a plurality of copper or aluminium bars, which are connected electrically by a copper or aluminium ring at each end (not shown), and is known as a squirrel cage rotor, and the asynchronous generator a squirrel cage induction generator.

The asynchronous generator 300 is essentially a single electrical machine, rather than comprising three electrical machines as found in the prior art of Figures 1 and 2, i.e. which have a pilot exciter, main exciter and generator. The embodiment of Figure 3a therefore has the advantage of being lighter and less bulky than the prior art, thereby reducing core drag and nacelle drag when used with an aircraft engine.

A further advantage of the present invention is that the squirrel cage rotor 301 can be used as an asynchronous motor. For example, suppose that the stator 302 is connected to an AC current source, which may be provided by the active rectifier 310. When a current is provided, a magnetic field is developed in the stator 302, which field will move relative to the rotor bars. This induces a strong current in the rotor bars, which offer little resistance to the current as they are short circuited by the end rings. As a result, the rotor 301 begins to turn, as in a motor, at a speed which is just below the synchronous speed of the rotating magnetic field, i.e. the frequency of the alternating current, from the stator 302.

As such, the asynchronous generator 300 can act as a motor for starting an aircraft engine. It will be appreciated that the provision of a starting motor according to the embodiments of Figures 3a and 4, i.e. whereby an active rectifier 310 drives an asynchronous generator 300 as a motor, is less complex and less bulky than the starting circuitry provided in the prior art of Figure 2. This is because the excitation control unit 150, the start power electronics (not shown), and the contactors 240a/240b required in the prior art shown in Figure 2 are no longer required.

Further details of the control provided by the active rectifier 310 will now be provided in relation to Figures 3a and 4. In use, the aircraft engine drives the rotor 301 to a rotational speed above the synchronous speed of the generator 300. Electrical power generated by the generator 300 is coupled to the active rectifier 310, either directly or via a filter 340 (which can be of any suitable design). The active rectifier 310 is adapted to convert the AC output from the generator 300 into a DC output voltage V_{DC} for use by one or more DC loads. The active rectifier 310 is adapted to control the output DC voltage V_{DC} using pulse width modulation (PWM) techniques using the transistor switches 314. The transistor switches 314 are controlled (for example by control logic, not shown) to pulse width modulate the voltage waveform to ensure that the output DC voltage is set to the desired level. The four-quadrant capability of the active rectifier 310 also allows fully independent control of the reactive power in the system, which thereby has a direct influence upon system voltage, i.e. the AC voltage connected to the aircraft system bus 330. The control is based on the DC voltage, which is stable when power flows between, the generator, DC loads and AC loads are in equilibrium.

A smoothing capacitor 316 may be provided for smoothing the DC output voltage from the active rectifier 310, as shown.

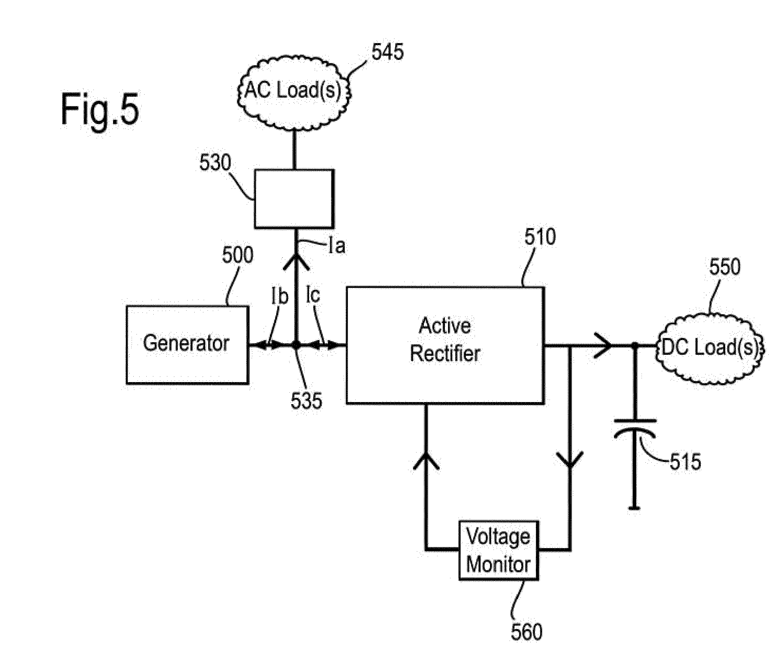

Thus, in addition to controlling the DC output voltage V_{DC}, the active rectifier 310 also acts to control the voltage at node 335, which in turn acts to keep the DC voltage level constant, and to regulate to AC voltage connected to the aircraft system bus 330, even with different DC loads being connected to the output of the active rectifier 310 and different AC loads being connected to the aircraft system bus 330, as will be described in greater detail below with reference to Figure 5.

Figure 5 shows further details of an embodiment wherein an asynchronous generator 500 is coupled to an active rectifier 510, and to an aircraft system bus 530. The active rectifier 510 provides a DC output voltage to one or more DC loads 550. One or more AC loads 545 are coupled to the aircraft system bus 530. A voltage monitor 560 measures the DC voltage at the output of the active rectifier 310.

To attain system equilibrium under all conditions the following conditions must be met. The power of the generator 500 must be equal to the sum of the AC load power and the active rectifier (DC) power. If this condition is not met, the DC capacitor 515 will either be discharging or charging. A low or high DC voltage requires the active rectifier 510 to be controlled such that more or less power is extracted from the generator 500. This is achieved by changing the slip frequency, i.e. the AC frequency that is produced by the PWM action. The DC voltage measurement, measured by voltage monitor 560, is used to control the AC frequency of the active rectifier 510 to establish control of the DC voltage. As such the DC voltage measured by voltage monitor 560 is the primary measurement.

Another governing condition is that the AC reactive power must meet a similar condition. In particular, the reactive power of the generator 500 must equal the sum of the reactive power of the AC load(s) 545 and the AC reactive power of the active rectifier 510. If this condition is not met the voltage will not be stable.

This condition is controlled by changing the modulation index of the PWM performed by the active rectifier 510. Changing the modulation index of the PWM action changes the ratio between the magnitude of the active rectifier's AC voltage and its DC voltage. Therefore, as the DC voltage varies as a consequence of dynamic changes in the power control described above, the AC voltage magnitude produced by the PWM action is kept constant by changing the modulation index.

Once the system voltage has been "set" by the active rectifier 510, the reactive power of the generator 500 is a consequence of its operating point, while the load reactive power is determined by the load. The mismatch in reactive power between the AC load(s) 545 and the generator 500 inherently circulates in the active rectifier 510 and is nominally uncontrolled (it is a design condition, but not an active control variable).

Thus, the DC voltage is managed by controlling the frequency of the PWM output, and hence the generator power. AC voltage is controlled by adjusting the modulation index to compensate for changes in DC voltage. Reactive power flows naturally resolve as a consequence of the voltage imposed by the active rectifier, with the active rectifier changing the balance of reactive power.

The electrical system architecture described in the embodiments above has the advantage of being less bulky and lighter than the prior art systems.

Furthermore, the electrical system architecture can be easily changed from a generator-mode to a motor-mode, for example for starting an aircraft engine, without having additional circuitry or switches. This is because in the electrical system architecture according to the present invention, the system voltage control and starting function are both provided by the active rectifier, such that the active rectifier has the advantage of effectively eliminating the need for a separate excitation control unit and start power electronics, required in the prior art.

The use of an asynchronous generator also has the advantage of having a "slip range" that inherently softens the transient that is presented to the engine generator and gearbox drive train, for example upon sudden load changes. The amount of slip is a design parameter that can be tuned to provide the optimum performance characteristics for a given application.

According to another embodiment, the asynchronous generator may be replaced by a permanent magnet generator, which can also be used as a one-stage electrical power generator. Such an embodiment still has the advantages of only requiring one electrical machine, thereby being less bulky, and the advantage of being easily re-configurable into a motor-mode. However, according to this particular embodiment, the electrical power generator system loses the advantage of the natural slip as is offered by the asynchronous generator, and therefore loses the softness during sudden or large load changes.

In most cases, the control objective is to maintain a selected aircraft busbar within specified voltage limits. In the conventional system, the voltage control needs to compensate for aircraft cable impedance and is relatively slow due to the inductance of the generator exciter and field winding giving it a long time constant, which restricts the system's dynamic performance. Since control of the power output of the electrical power generating system according to embodiments of the present invention is implemented by the active rectifier, without passing through one or more stages of exciters, the response to transients in the system can be handled much quicker.

Also, since the active rectifier can be placed away from the asynchronous generator in a separate location in the aircraft, i.e. away from the aircraft engine, the terminals of the active rectifier can be placed close to the desired point of voltage regulation for the aircraft power system. In other words, the invention has the advantage of enabling the active rectifier to be located close to the load rather than close to the generator (and thus to the aircraft engine(s)). In this configuration, effectively, the generator is directly connected to the load without an intervening power electronic converter. This is particularly advantageous in an aircraft electrical power system employing variable frequency distribution.

The active rectifier has the advantage of determining the instantaneous power extracted from the generator, adding a degree of control and complexity not previously available in aircraft networks.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. An electrical system architecture for an aircraft comprising:
a generator (300, 500) driven by an engine of the aircraft to generate electrical energy, and arranged for extracting the said electrical energy as an AC signal for supply to a system bus (330, 530); and
an active rectifier (310, 510) coupled to the system bus and adapted to rectify the AC signal to a DC signal for supply to a load in the system, and for controlling extraction of the said electrical energy by the generator (300, 500).

2. The architecture according to claim 1 wherein the generator (300, 500) is an asynchronous generator, and the said controlling comprises adjusting a difference between a power frequency of the active rectifier (310, 510) and an instantaneous synchronous frequency of the asynchronous generator (300, 500) to provide a slip frequency.

3. The architecture according to claim 1 or 2, wherein the generator (300, 500) is a squirrel cage induction machine.

4. The architecture according to claim 1, wherein the generator (300, 500) is a synchronous permanent magnet generator.

5. The architecture according to any preceding claim, further comprising an output voltage monitoring means (560) for monitoring the DC signal of the active rectifier (510), wherein the active rectifier (510) is adapted to maintain the power flow at a constant by adjusting the active rectifier power frequency in relation to the instantaneous synchronous frequency of the generator (500) in accordance with the monitored DC signal.

6. The architecture according to claim 5, wherein the active rectifier (310, 510) is adapted to maintain an output power of the generator (300, 500) to be equal to the sum of the power of one or more AC loads connected to the system bus (330, 530) and the DC power of the active rectifier (310, 510).

7. The architecture according to claim 6, wherein the active rectifier (310, 510) is controlled using pulse width modulation.

8. The architecture according to claim 7, wherein a modulation index of the pulse width modulation operation is changed to control a ratio between the magnitude of the AC voltage and DC voltage of the active rectifier (310, 510).

9. An electrical power generation system, comprising:
a generator (300, 500), including a stator (302) and a rotor (301), for converting mechanical power into alternating current electrical power by electromagnetic induction; and
an active rectifier (310, 510) for converting the alternating current output of the generator (300) into direct current electrical power,
wherein the active rectifier (310, 510) is further adapted to control the alternating current electrical power provided at the output of the generator (300, 500).

10. A system according to claim 9, wherein the active rectifier (310, 510) is adapted to control the alternating current electrical power provided at the output of the generator by adjusting the difference between the active rectifier power frequency and the instantaneous synchronous frequency of the generator, thereby creating a slip frequency.

11. A system according to claim 10, further comprising an output voltage measuring means for measuring the output DC voltage of the active rectifier (310, 510), wherein the active rectifier (310, 510) is arranged to maintain the power flow of the electrical power generation system at a constant by adjusting the slip frequency in accordance with the measured output DC voltage.

12. A system according to any one of claims 9 to 11, wherein the generator (300, 500) is a squirrel cage induction machine.

13. A system according to any one of claims 9 to 11, wherein the generator (300, 500) is a synchronous permanent magnet generator.

14. A system according to any one of claims 9 to 13 used in an aircraft electrical system, the generator (300, 500) arranged to be driven by an engine of the aircraft.

15. A system according to claim 14, wherein the generator (300, 500) is located at the engine and the active rectifier (310, 510) is located at some load point in the aircraft electrical system.
